Europäisches Patentamt

(19) European Patent Office

Office européen des brevets

(11) Numéro de publication : **0 275 785 B1**

(12) FASCICULE DE BREVET EUROPEEN

(45) Date de publication du fascicule du brevet :
27.02.91 Bulletin 91/09

(51) Int. Cl.⁵ : **A47J 37/08, A47J 37/06**

(21) Numéro de dépôt : 87402971.3

(22) Date de dépôt : 23.12.87

(54) **Appareil électro-ménager combinant grille-pain et four.**

(30) Priorité : 26.12.86 FR 8618201

(43) Date de publication de la demande :
27.07.88 Bulletin 88/30

(45) Mention de la délivrance du brevet :
27.02.91 Bulletin 91/09

(84) Etats contractants désignés :
BE CH DE ES FR GB IT LI NL SE

(56) Documents cités :
FR-A- 2 103 875
FR-A- 2 250 499
US-A- 2 345 769
US-A- 2 368 440
US-A- 2 711 684
US-A- 2 920 551
US-A- 3 823 658

(73) Titulaire : SEB S.A.
F-21260 Selongey (FR)

(72) Inventeur : Hantz, Dominique
Basse/Rupt
F-88120 Vagney (FR)
Inventeur : Antoine, Dominique
Cleurie
F-88120 Vagney (FR)
Inventeur : Jackowski, Bruno
1 A, rue Majnoni d'Intignano
F-21121 Fontaine-les-Dijon (FR)

(74) Mandataire : Bouju, André
Cabinet Bouju 38 avenue de la Grande Armée
F-75017 Paris (FR)

## Description

La présente invention concerne un appareil électroménager servant à la fois de grille-pain et de four, notamment de four d'appoint. Un tel appareil est défini dans le préambule de la revendication 1.

Une telle association de fonctions de cuisson dans un même appareil domestique correspond au besoin des consommateurs de disposer d'appareils électroménagers multi-usages compacts.

On a déjà proposé des appareils combinant les fonctions de grille-pain et de four. Certains assurent le grillage du pain et le réchauffage ou la cuisson des plats dans le même compartiment, dans la même position de service et avec le même mode de chauffage. Une telle disposition a le mérite d'être compacte mais présente de sérieux inconvénients. En effet le grillage du pain requiert un rayonnement de longueur d'onde courte alors que le réchauffage et la cuisson nécessitent un rayonnement de longueur d'onde plus grande. Par ailleurs le réchauffage et la cuisson se font obligatoirement à l'horizontale. Or pour obtenir une bonne répartition du grillage sur ses deux faces, le pain doit être disposé en position verticale. Les appareils de ce type ne peuvent donc remplir correctement leurs deux fonctions.

Les autres appareils connus combinant grille-pain et four présentent deux compartiments. Celui où s'effectue le grillage du pain est aménagé verticalement, l'autre servant au réchauffage des plats est positionné horizontalement. De tels appareils remplissent correctement leurs deux fonctions mais ils ont l'inconvénient d'être relativement encombrants. La présente invention vise à résoudre le problème exposé, en permettant une exécution parfaite des deux fonctions four et grille-pain avec des moyens simples et fiables, et tout en conservant à l'appareil un volume aussi compact que possible.

Un appareil du type défini dans le préambule de la revendication 1 est décrit dans le FR-A-2 250 499. Cet appareil présente deux inconvénients majeurs :

- d'une part, son système de chauffage, qui est unique pour les deux modes de cuisson, est nécessairement non optimisé pour l'un au moins de ces deux modes de cuisson ;
- d'autre part, le passage d'une position de service à l'autre nécessite des manipulations, en particulier manipulation du plateau 10, qui est brûlant à l'issue d'une utilisation "four", et que l'on doit ranger (alors qu'il risque d'être gras) et éviter d'égarer lors de l'utilisation grille-pain.

Les inconvénients ci-dessus sont éliminés grâce au dispositif conforme à l'invention qui comprend, selon la partie caractérisante de la nouvelle revendication 1 :

- pour la cuisson et le réchauffage des plats, l'appareil comporte un deuxième compartiment allongé distinct du compartiment pour le grillage du pain et comportant ses propres moyens de chauffage distincts de ceux du compartiment de grillage, les deux compartiments étant fixes l'un par rapport à l'autre et parallèles l'un à l'autre, chacune des deux positions sensiblement orthogonales étant une position d'utilisation de l'un respectif des compartiments et des moyens de chauffage associés, et de non-utilisation de l'autre compartiment et des moyens de chauffage associés.

Grâce à l'appareil ci-dessus, il est possible d'optimiser, d'une part pour le grillage et d'autre part pour la cuisson au four, les moyens de chauffage spécifiques correspondants, notamment pour ce qui concerne la gamme de longueurs d'ondes des infrarouges nécessaires à ces deux chauffages.

De plus, on passe d'un mode d'utilisation à l'autre par simple basculement de 90° d'une position à une autre position, sans aucune transformation de l'appareil.

Selon une réalisation préférée, pour le grillage du pain on dispose les compartiments verticalement et pour la cuisson ou le réchauffage on dispose les compartiments horizontalement par simple basculement de 90° de l'appareil et cela grâce aux moyens d'appui qui permettent ce double positionnement stable de l'appareil.

Selon une réalisation avantageuse de l'invention l'appareil comprend des moyens de sécurité pour interdire l'alimentation électrique du compartiment qui ne se trouve pas dans sa position normale de service.

Ainsi est évitée toute utilisation anormale voire dangereuse de l'appareil, c'est-à-dire la mise en service du four en position verticale ou du grille-pain en position horizontale.

Ces moyens de sécurité peuvent notamment être constitués par des interrupteurs placés en série avec les interrupteurs à bouton-poussoir normalement prévus pour la commande manuelle, lesdits interrupteurs de sécurité pouvant être actionnés soit par le poids de l'appareil soit en fonction de son orientation dans l'espace.

Selon une autre réalisation, les moyens de sécurité sont du type mécanique, commandés par gravité et prévus pour neutraliser les boutons-poussoirs de commande, lorsque l'appareil n'est pas dans la position normale d'utilisation des compartiments correspondants.

D'autres particularités et avantages de l'invention résulteront encore de la description qui va suivre.

Aux dessins annexés donnés à titre d'exemples non limitatifs, on a figuré un mode de réalisation de l'appareil suivant l'invention et représenté différents dispositifs de sécurité.

- La figure 1 est une vue en perspective de l'appareil en position grille-pain.
- La figure 2 est une vue analogue à la figure 1 montrant l'appareil en position four.

– La figure 3 est une vue en perspective de l'appareil dans la position de la figure 1 montrant schématiquement deux dispositifs de sécurité.

– La figure 4 est une vue schématique en perspective d'une des faces latérales de l'appareil avec arrachement partiel du capot, montrant un dispositif de sécurité à pendule coopérant avec le bouton de commande du compartiment four, l'appareil étant en position four et le bouton de commande du four n'étant pas enclenché.

– La figure 5 est une vue analogue à la figure 4, le bouton de commande du four étant enclenché.

– La figure 6 est une vue en perspective du même dispositif de sécurité à pendule, l'appareil étant en position grille-pain et le bouton de commande du four étant enclenché.

– La figure 7 est une vue schématique partielle en perspective montrant un dispositif de verrouillage du coulisseau de commande du compartiment grille-pain, l'appareil étant en position grille-pain.

– La figure 8 est une vue en perspective du même dispositif de verrouillage, l'appareil étant en position four.

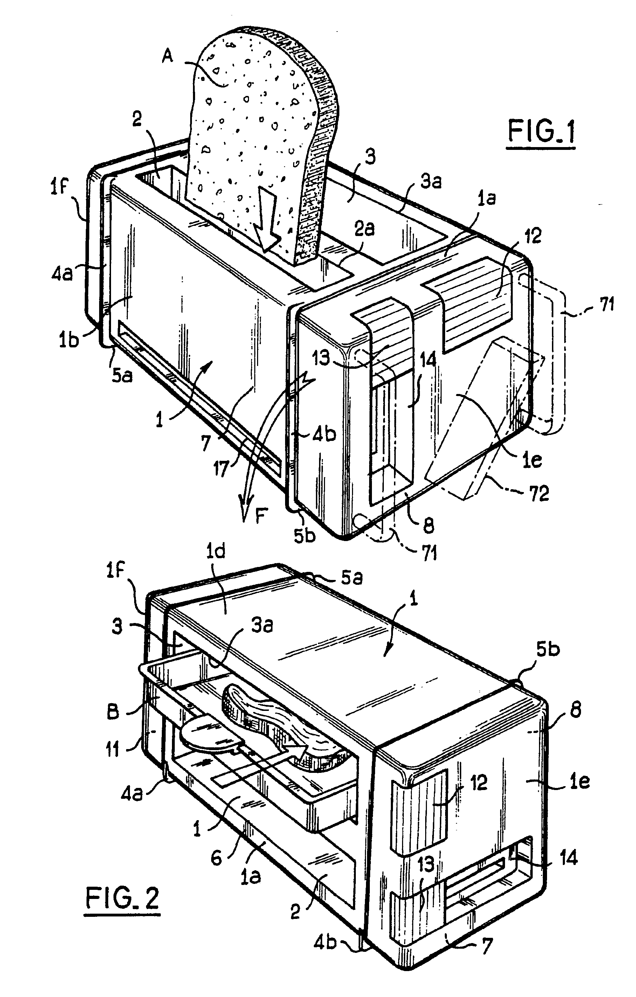

Dans la réalisation de l'invention représentée aux figures 1 et 2, l'appareil électroménager 1 combinant le grillage du pain A et la cuisson ou le réchauffage de plats B (schématisés en cours d'introduction) présente une forme générale parallélépipédique. Il comporte deux compartiments 2, 3 distincts, allongés également parallélépipédiques, s'étendant parallèlement et aménagés respectivement pour le grillage et la cuisson. Ces compartiments 2 et 3 présentent des volumes adaptés à leurs fonctions, l'ouverture 2a du grille-pain 2 étant sensiblement plus étroite que l'ouverture 3a du four 3, ces ouvertures 2a et 3a débouchant sur la même face 1a de l'appareil.

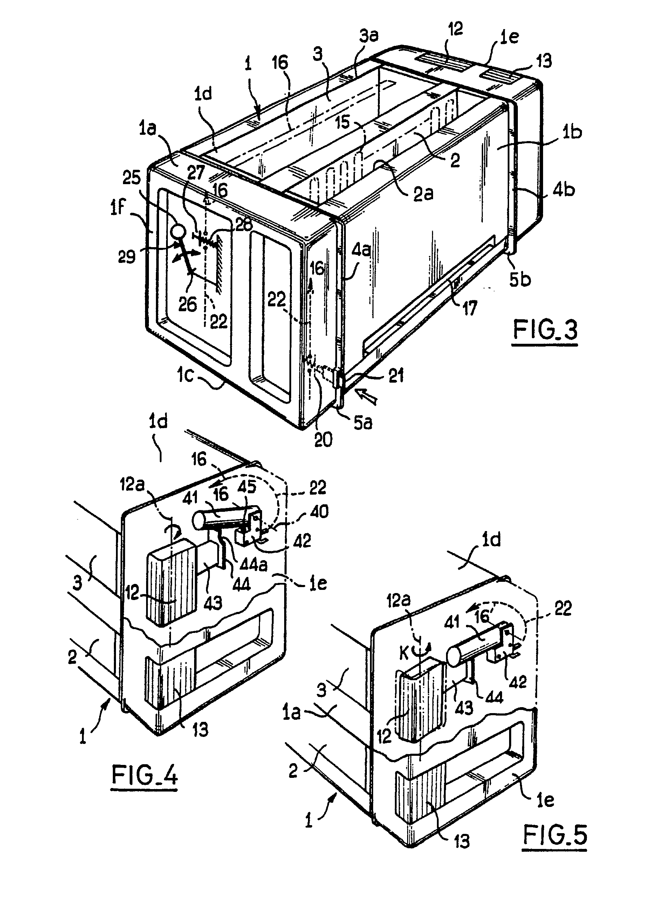

Le compartiment 2 est équipé de façon connue de résistances en nappes ou tubulaires 15 (voir figure 3), pouvant être amenées au rouge vif, auquel cas elles émettent des infra-rouges courts. Le compartiment 3 est équipé, également de façon connue, de résistances blindées ou stéatites 16 pouvant émettre des infra-rouges longs.

Les deux circuits d'alimentation électrique des résistances 15 et 16 sont indépendants et, comme on le verra, des moyens sont prévus pour qu'ils ne puissent fonctionner simultanément, quelle que soit la position de l'appareil 1. Ce dernier comporte en outre des moyens d'appui, constitués par des nervures latérales 4a, 5a et 4b, 5b faisant saillie sur les faces consécutives 1b adjacente à 1a et 1c opposée à 1a. Les nervures considérées sont disposées au voisinage des faces latérales 1e, 1f de l'appareil. Les nervures 4a et 5a sont dans le prolongement l'une de l'autre et forment ainsi une équerre. Il en est de même pour les nervures 4b, 5b. Ces nervures sont obtenues par exemple grâce à un moulage adéquat du boîtier en matière plastique de l'appareil 1.

Ces moyens d'appui, permettent, par basculement de l'appareil 1 de présenter les compartiments 2 et 3 selon des positions sensiblement orthogonales l'une à l'autre et correspondant à leur position de service respective. La figure 1 montre ainsi l'appareil 1 reposant sur les moyens d'appui 5a, 5b, la face 1c étant en regard du plan d'appui non figuré. Les compartiments 2 et 3 sont alors sensiblement verticaux et présentent leur ouverture respectivement 2a, 3a sur le dessus de l'appareil 1. Dans cette position le compartiment 2 où s'effectue le grillage est en position de service. La figure 2 montre l'appareil 1, après basculement de 90° suivant F, la face 1b étant alors en regard du plan d'appui et l'appareil reposant sur les nervures 4a, 4b.

Dans cette position les compartiments 2 et 3 sont sensiblement horizontaux et présentent leur ouverture 2a, 3a sur le devant de l'appareil 1. Le compartiment 3 où s'effectue la cuisson est en position de service.

Les moyens de chauffage 15 et 16 propres à chacun des compartiments 2 et 3 sont alimentés par l'intermédiaire de dispositifs de commande distincts 12 et 13 en eux-mêmes connus, situés sur la même face latérale 1e de l'appareil, en regard de leur compartiment respectif.

L'alimentation des résistances 15 du compartiment 2 de grillage est ainsi commandée par un coulisseau 13 déplaçable le long d'une rainure 14, tandis que l'alimentation des résistances 16 du compartiment de cuisson 3 est commandée par un interrupteur à bouton poussoir 12.

Le fonctionnement d'un tel appareil combinant grille-pain et four est d'une grande simplicité. L'utilisateur voulant se servir de l'appareil 1 comme grille-pain le pose sur les nervures 5a et 5b de façon que le compartiment 2 où s'effectue le grillage soit orienté verticalement, l'ouverture 2a débouchant vers le haut. On dispose alors d'un grille-pain classique. L'utilisateur voulant maintenant se servir de l'appareil 1 comme four le fait basculer suivant F sur les nervures d'appui 4a et 4b de façon que le compartiment 3 où s'effectue la cuisson soit à l'horizontale. On dispose alors d'un four classique.

Les moyens prévus par l'invention, qui mettent en oeuvre, deux faces d'appui distinctes, en rupture avec la pratique traditionnelle, permettent ainsi une éxecution parfaite des deux fonctions four et grille-pain de façon simple et fiable, tout en conservant à l'appareil un volume aussi compact que possible et sans grever son prix de revient par une complication de structure.

Dans une réalisation préférée de l'invention, l'appareil comporte à titre complémentaire des moyens de sécurité interdisant le fonctionnement des moyens de chauffage d'un compartiment lorsque celui-ci n'est pas dans sa position normale de service, de façon à éviter toute erreur de manipulation. De préférence, ces moyens de sécurité doivent être aussi simples que possible pour ne pas charger le prix de revient de l'appareil tout en répondant aux normes de sécurité en vigueur.

Selon une première réalisation, ces moyens de sécurité comprennent (figure 3) un interrupteur 20 à poussoir 21, placé sur le circuit 22 d'alimentation électrique des résistances 16 du compartiment 3 de cuisson et en série avec l'interrupteur de commande manuelle de ces résistances dont le bouton d'actionnement est vu en 12 sur les figures 1 et 2.

Le poussoir 21 fait normalement saillie relativement à la nervure 4a, position pour laquelle l'interrupteur 20 est ouvert de sorte que les résistances 16 du four 3 ne peuvent être alimentées. Au contraire, le poussoir 21 ferme l'interrupteur 20 et permet cette alimentation quand l'appareil est en appui sur les nervures 4a, 4b (position four).

Des moyens analogues peuvent être avantageusement prévus suivant l'une des nervures 5a ou 5b pour commander l'alimentation des résistances 15 du grille-pain 2.

Sur la figure 3 on a schématisé, à titre de variante, un deuxième moyen de sécurité électrique du type pendulaire, pouvant être utilisé pour l'un et/ou l'autre des deux circuits de chauffage 15, 16. L'organe sensible de ce moyen de sécurité comprend un pendule 25, mobile autour d'un axe 26 et capable d'enclencher en position active un interrupteur 27 normalement ouvert sous l'action d'un ressort 28, cet interrupteur étant placé sur le circuit 22 d'alimentation des résistances 16 du four 3 dans l'exemple décrit.

Lorsque l'appareil est en position grille-pain (figure 3), le pendule 25 est écarté de l'interrupteur 27 ce qui condamne l'alimentation des résistances 16. La course du pendule 25 est limitée par une butée 29. Si on bascule l'appareil suivant F pour l'amener en position four, le pendule 25 vient fermer l'interrupteur 27. L'action manuelle sur le bouton-poussoir 12 permet alors le chauffage du four 3.

Le système de sécurité positive qui vient d'être décrit du genre comportant deux interrupteurs en série pour chaque circuit est parfaitement fiable. Il présente toutefois l'inconvénient de grever quelque peu le prix de revient de l'appareil.

On va maintenant décrire des systèmes de sécurité simplifiés, permettant de ne prévoir qu'un interrupteur par circuit.

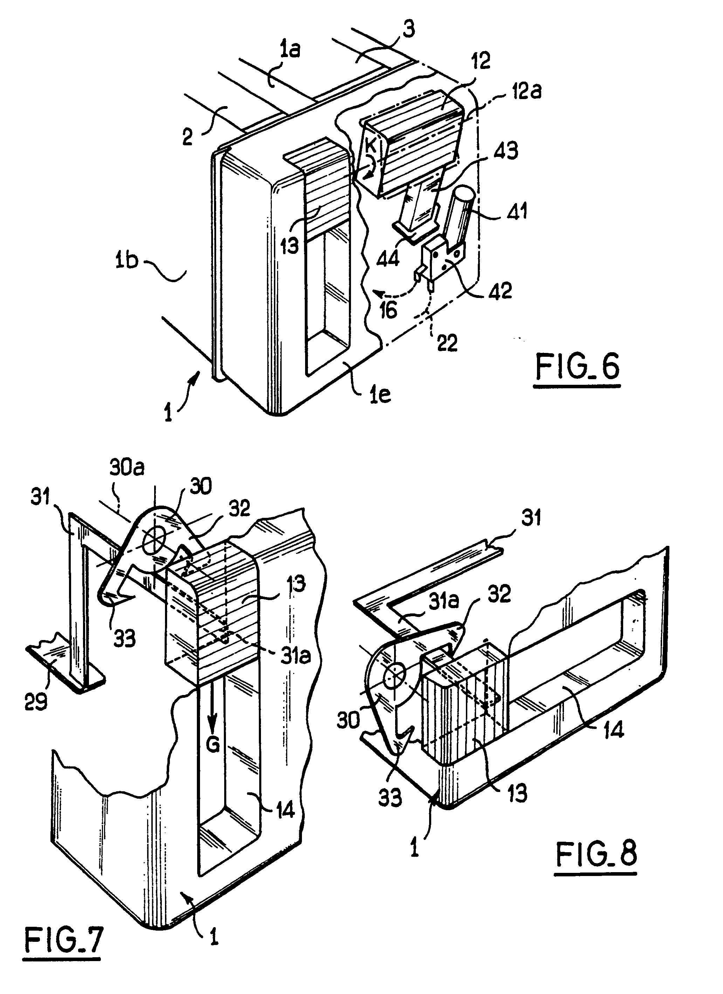

Les systèmes en question sont de préférence spécifiquement prévus pour la commande du four 3 (réalisation des figures 4 à 6) et celle du grille-pain (réalisation des figures 7 et 8).

Les moyens de sécurité pour le four 3 schématisés aux figures 4, 5 et 6 comprennent un micro-rupteur 42 placé sur le circuit 22 d'alimentation électrique des résistances 16. Le micro-rupteur 42 comporte un poussoir 45 qui fait saillie en position d'ouverture et est dirigé vers le haut lorsque l'appareil est en position four (figure 4). Sur le boîtier du micro-rupteur 42 est monté rotativement autour d'un axe 40 parallèle à l'axe longitudinal de l'appareil 1, un levier pesant 41 formant pendule. Le levier 41 est disposé, de façon que, l'appareil 1 étant en position four, il enfonce par son propre poids le poussoir 45 (figure 5) de façon à fermer le circuit 22.

De son côté, le bouton de commande 12 du four 3 qui est monté à pivotement autour d'un axe 12a orthogonal aux faces 1b, 1d, est prolongé par un doigt 43 terminé par une came transversale 44 coopérant avec l'extrémité libre du levier 41. La came 44 présente un décrochement latéral 44a situé au-delà du levier 41 lorsque le bouton 12 est au repos (position de la figure 4). Le micro-rupteur 42 est disposé au voisinage et dans le prolongement du doigt 43 de façon que, l'appareil 1 étant en position four, l'extrémité libre du levier 41 repose en butée sur la came 44, laissant le poussoir 45 en saillie au-dessous de lui.

Si pour allumer le four 3, on enclenche le bouton de commande 12 (figure 5) celui-ci pivote suivant K, autour de l'axe 12a ainsi que le doigt 43 et la came 44 dont le décrochement 44a permet le pivotement du levier pesant 41. Celui-ci vient appuyer sur le poussoir 45 ce qui entraîne la fermeture du circuit 22 et permet l'alimentation des résistances 16 (figure 5).

Pour arrêter le four on ramène le bouton de commande 12 à sa position initiale par une poussée en sens inverse de K. La rampe du décrochement 44a de la came 44 soulève le levier 41 lequel vient de nouveau reposer sur la tranche horizontale de cette came libérant ainsi le poussoir 45 ce qui ouvre le circuit 22.

Lorsque l'appareil est en position grille-pain (figure 6) le levier 41 formant pendule est astreint par son propre poids à s'écarter du poussoir 45 de sorte que celui-ci ne peut pas être enfoncé ; le circuit 22 est donc ouvert et cela quelle que soit la position du bouton de commande 12 du four, même si ce dernier est appuyé par inadvertance et a tourné suivant K comme montré figure 6.

Une sécurité moins poussée, par simple verrouillage mécanique peut être prévue pour le grille-pain, comme on va le voir en référence aux figures 7 et 8. Cette réalisation concerne le cas classique où le compartiment 2 pour le grillage du pain comporte un panier mobile schématisé partiellement en 29, solidaire d'une équerre 31 aboutissant à un coulisseau de commande 13 déplaçable sur le côté du compartiment 2 dans une rainure 14.

De façon connue, l'actionnement suivant G du coulisseau 13 pour l'amener en position basse, déclenche également l'alimentation des résistances de chauffage 15. Les moyens de sécurité prévus dans le cadre de cette structure comprennent un crochet 30 oscillant autour d'un axe 30a parallèle à l'axe longitudinal de l'appareil 1 et situé au-dessus de la tige horizontale 31a de l'équerre 30 lorsque l'appareil est en position grille-pain (figure 7).

Ce crochet 30 comporte deux bras 32 et 33 formant mâchoire dont les extrémités sont recourbées vers l'intérieur et laissent entre elles un passage suffisant à la tige 31a de l'équerre 31 dans la position précitée, le crochet 30 étant en équilibre stable. En déplaçant le coulisseau 13 vers le bas suivant, on peut ainsi descendre le panier 29 et enclencher l'interrupteur non figuré d'alimentation des résistances 15.

Quand l'appareil 1 est basculé horizontalement pour utiliser le compartiment 3, le crochet 30 pivote et vient bloquer par l'un de ses bras recourbés 32 ou 33 (suivant le sens de pivotement de l'appareil), la tige 31a du coulisseau 13 ce qui interdit l'utilisation du compartiment 2. Lorsque l'appareil 1 est redressé, le crochet 30 pivote à nouveau pour revenir dans la position de la figure 7 et libère le coulisseau 13.

Il est évident que l'invention n'est pas limitée aux réalisations décrites et qu'on peut y apporter des variantes d'exécution. Ainsi pour faciliter le pivotement de l'appareil suivant F, les faces latérales de l'appareil pourraient être pourvues de poignées schématisées en 71 ou en 72 sur la figure 1.

De même les interrupteurs du type pendulaire peuvent être du genre tubes à mercure.

**Revendications**

1. Appareil électroménager combinant le grillage du pain et la cuisson ou le réchauffage de plats, muni de moyens d'appui (5a, 5b, 4a, 4b) permettant deux positions de fonctionnement sensiblement orthogonales, respectivement pour le grillage du pain, muni de ses propres moyens de chauffage (15), caractérisé en ce que pour la cuisson et le réchauffage des plats, l'appareil comporte un deuxième compartiment (2) pour le grillage du pain et comportant ses propres moyens de chauffage (16) distincts de ceux (15) du compartiment de grillage (2), les deux compartiments étant fixes l'un par rapport à l'autre et parallèles l'un à l'autre, chacune des deux positions sensiblement orthogonales étant une position d'utilisation de l'un respectif des compartiments et des moyens de chauffage associés, et de non-utilisation de l'autre compartiment et des moyens de chauffage associés.

2. Appareil (1) conforme à la revendication 1, caractérisé en ce qu'il est de forme sensiblement parallélépipède, en ce que lesdits compartiments (2, 3) présentent chacun leur ouverture (2a, 3a) sur une même face (1a) de l'appareil (1) et en ce que les moyens d'appui (4a, 4b ; 5a, 5b) sont disposés sur la face opposée à ces ouvertures et sur une face adjacente (1b), intermédiaire entre la précédente et lesdites ouvertures (2a, 2b).

3. Appareil (1) conforme à la revendication 2, caractérisé en ce que les moyens d'appui comprennent des nervures (4a, 4b ; 5a, 5b) parallèles disposées au voisinage des faces latérales (1e, 1f) de l'appareil (1), ces nervures (4a, 4b ; 5a, 5b) étant ménagées sur deux des grandes faces consécutives (1b, 1c).

4. Appareil conforme à l'une des revendications 1 à 3, caractérisé en ce qu'il comprend des moyens de sécurité pour interdire l'alimentation électrique de celui des compartiments (2, 3) qui ne se trouve pas dans sa position normale de fonctionnement.

5. Appareil conforme à la revendication 4, caractérisé en ce que les moyens de sécurité sont constitués par des interrupteurs placés en série avec les interrupteurs à bouton-poussoir normalement prévus pour la commande manuelle, lesdits interrupteurs de sécurité étant commandés soit par le poids de l'appareil (interrupteurs 20) soit par des moyens (25) sensibles à son orientation dans l'espace (interrupteur 27).

6. Appareil conforme à la revendication 4, caractérisé en ce que les moyens de sécurité sont du type mécanique (30 ou 41), commandés par gravité et prévus pour neutraliser les boutons-poussoirs (12, 13) de commande, lorsque l'appareil (1) n'est pas dans la position normale d'utilisation des circuits correspondants.

7. Appareil conforme à la revendication 4, caractérisé en ce que les moyens de sécurité comprennent au moins un interrupteur (20) à poussoir (21) placé sur le circuit d'alimentation électrique (22) de l'un des compartiments (3) de cuisson, ce poussoir (21) faisant saillie relativement aux moyens d'appui (4a, 4b ; 5a, 5b) et étant actionné pour ouvrir l'interrupteur (20) lorsque le compartiment (3) commandé par cet interrupteur (20) n'est pas en position de service.

8. Appareil (1) conforme à la revendication 4 ou 5, caractérisé en ce que les moyens de sécurité comprennent au moins un interrupteur (27, 42) placé sur le circuit d'alimentation électrique de l'un des compartiments de cuisson (2, 3), cet interrupteur (27, 42) étant commandé par un pendule (25, 41) dont la position angulaire dépend de celle de l'appareil (1), ce pendule (25, 41) ouvrant l'interrupteur (27, 42) lorsque le compartiment (2, 3) commandé par cet interrupteur n'est pas en position de service.

9. Appareil conforme à la revendication 8, caractérisé en ce que le bouton-poussoir (12) pour la commande manuelle du circuit de chauffage (22) de l'un des compartiments (2, 3) comporte des moyens, tels qu'une came (44) pour commander l'interrupteur (42) correspondant par l'intermédiaire du pendule (41), la liaison mécanique entre le bouton-poussoir (12) et le pendule (41) étant neutralisée lorsque l'appareil n'est pas dans la position prévue pour la mise en service du circuit de chauffage (22) considéré.

10. Appareil (1) conforme à la revendication 4, dans lequel le compartiment (2) pour le grillage du pain comporte un panier mobile (29) actionné par un coulisseau (13) déplaçable sur le côté du compartiment (2), l'actionnement de ce coulisseau (13) déclenchant également l'alimentation des moyens de chauffage du compartiment (2), caractérisé en ce que les moyens de sécurité comprennent un crochet (30) oscillant en fonction de l'orientation de l'appareil, ce crochet (30) bloquant le coulisseau (13) en position inactive lorsque ledit compartiment (2) n'est pas dans sa position naturelle de fonctionnement.

**Ansprüche**

1. Elektrohaushaltsgerät, welches das Brotrösten mit dem Garen oder dem Aufwärmen von Speisen kombiniert, mit Stützmitteln (5a, 5b ; 4a, 4b), die zwei im wesentlichen zueinander rechtwinklige Betriebsstellungen für das Rösten bzw. für das Garen ermöglichen, und mit einem langgestreckten Abteil (2) das für das Brotrösten geeignet ist und über seine eigenen Heizmittel (15) verfügt, dadurch gekennzeichnet, daß für das Garen und das Aufwärmen von Speisen das Gerät ein zweites, von dem Abteil (2) für das Brotrösten getrenntes langgestrecktes Abteil (3), das über seine eigenen Heizmittel (16) verfügt, umfaßt, die von denjenigen (15) des Röstabteils (2) getrennt sind, wobei die beiden Abteile in Bezug aufeinander feststehend und zueinander parallel sind, wobei jede der im wesentlichen zueinander rechtwinkligen Stellungen eine Stellung für die Benutzung eines der jeweiligen Abteile und der zugeordneten Heizmittel sowie eine Stellung der Nicht-Benutzung des anderen Abteils und der zugeordneten Heizmittel ist.

2. Gerät (1) nach Anspruch 1, dadurch gekennzeichnet, daß es im wesentlichen quaderförmig ist, daß jedes der genannten Abteile (2, 3) auf einer gleichen Fläche (1a) des Gerätes (1) seine Öffnung (2a, 3a) aufweist, und daß die Stützmittel (4a, 4b ; 5a, 5b) auf der von diesen Öffnungen abgewandten Fläche sowie auf einer angrenzenden Fläche (1b), welche sich zwischen der vorhergehenden Fläche und den genannten Öffnungen (2a, 2b) befindet, angeordnet sind.

3. Gerät (1) nach Anspruch 2, dadurch gekennzeichnet, daß die Stützmittel Rippen (4a, 4b ; 5a, 5b) umfassen, welche parallel zueinander stehen und in der Nähe der Seitenflächen (1e, 1f) des Gerätes (1) angeordnet sind, wobei diese Rippen (4a, 4b ; 5a, 5b) auf zwei der aufeinanderfolgenden Hauptflächen (1b, 1c) eingerichtet sind.

4. Gerät nach einem der Ansprüche 1 bis 3, dadurch gekennzeichnet, daß es Sicherheitsmittel umfaßt, um die elektrische Stromversorgung desjenigen der Abteile (2, 3), das sich nicht in seiner normalen Betriebsstellung befindet, zu verbieten.

5. Gerät nach Anspruch 4, dadurch gekennzeichnet, daß die Sicherheitsmittel aus Schaltern bestehen, die mit den Druckknopfschaltern in Reihe geschaltet sind, welche für die manuelle Steuerung normalerweise vorgesehen sind, wobei die genannten Schutzschalter entweder durch das Gewicht des Gerätes (Schalter 20) oder durch Mittel (25) gesteuert sind, welche für seine Raumorientierung empfindlich sind (Schalter 27).

6. Gerät nach Anspruch 4, dadurch gekennzeichnet, daß die Sicherheitsmittel vom mechanischen Typ (30 oder 41) sind, welche durch Schwerkraft gesteuert sind und zum Neutralisieren der Steuerdruckknöpfe (12, 13) vorgesehen sind, wenn das Gerät (1) sich nicht in der normalen Benutzungsstellung der entsprechenden Schaltungen befindet.

7. Gerät nach Anspruch 4, dadurch gekennzeichnet, daß die Sicherheitsmittel wenigstens einen Schalter (20) mit Druckvorrichtung (21) umfassen, der in dem Stromversorgungskreis (22) eines der Garungsabteile (3) angeordnet ist, wobei diese Druckvorrichtung (21) in Bezug auf die Stützmittel (4a, 4b ; 5a, 5b) herausragt und betätigt wird, um den Schalter (20) zu öffnen, wenn das durch diesen Schalter (20) gesteuerte Abteil (3) sich nicht in seiner Betriebsstellung befindet.

8. Gerät (1) nach Anspruch 4 oder 5, dadurch gekennzeichnet, daß die Sicherheitsmittel wenigstens einen Schalter (27, 42) umfassen, der in dem Stromversorgungskreis eines der Garungsabteile (2, 3) angeordnet ist, wobei dieser Schalter (27, 42) über ein Pendel (25, 41) gesteuert ist, dessen Winkelstellung von derjenigen des Gerätes (1) abhängig ist, und dieses Pendel (25, 41) den Schalter (27, 42) öffnet, wenn das durch diesen Schalter gesteuerte Abteil (2, 3) sich nicht in seiner Betriebsstellung befindet.

9. Gerät nach Anspruch 8, dadurch gekennzeichnet, daß der Druckknopf (12) zur manuellen Steuerung des Heizkreises (22) eines der Abteile (2, 3) Mittel wie einen Nocken (44) umfaßt, um mittels des pendels (41) den entsprechenden Schalter (42) zu steuern, wobei die mechanische Verbindung zwischen dem Druckknopf (12) und dem Pendel (41) neutralisiert wird, wenn das Gerät sich nicht in der Stellung befindet, die für die Inbetriebnahme des betrachteten Heizkreises (22) vorgesehen ist.

10. Gerät (1) nach Anspruch 4, in welchem das Abteil (2) für das Brotrösten einen beweglichen korb (29) umfaßt, der durch einen auf der Seite des Abteils (2) verschiebbaren Schieber (13) betätigt wird, wobei die Betätigung dieses Schiebers (13) auch die Stromversorgung der Heizmittel des Abteils (2) auslöst, dadurch gekennzeichnet, daß die Sicherheitsmittel einen Haken (30) umfassen, der in Abhängigkeit von der Orientierung des Gerätes schwingt, wobei dieser Haken (30) den Schieber (13) in seiner inaktiven Stellung blockiert, wenn das genannte Abteil (2) sich nicht in seiner natürlichen Betriebsstellung befindet.

## Claims

1. Domestic electric appliance (1) which combines toasting of bread and cooking or heating of dishes provided with bearing means (4a, 4b ; 5a, 5b) allowing for two operational positions located substantially at right angles to each other, respectively for toasting and cooking, and an elongated compartment (2) for toasting of bread provided with its own heating means (15), characterized in that for cooking and heating dishes, the appliance comprises a second elongated compartment (3) distinct from the compartment (2) for toasting of bread and provided with its own heating means (16) distinct from that (15) of the toasting compartment (2), both compartments being stationary with respect to each other and parallel to each other, each position of said positions substantially at right angles being a position of use of a respective one of the compartments and of the heating means pertaining thereto and of non-use of the other compartment and of the heating means pertaining thereto.

2. Appliance (1) in accordance with claim 1, characterized in that it has a substantially parallelepipedal shape, in that said compartments (2, 3) each have their opening (2a, 3a) on the same face (1a) of the appliance (1) and in that the bearing means (4a, 4b ; 5a, 5b) are disposed on the face remote from said openings and on an adjacent face (1b) located intermediate between said remote face and said openings (2a, 2b).

3. Appliance (1) in accordance with claim 2, characterized in that the bearing means (4a, 4b ; 5a, 5b) comprise parallel ribs (4a, 4b ; 5a, 5b) disposed in the vicinity of the lateral faces (1e, 1f) of the appliance (1), these ribs (4a, 4b ; 5a, 5b) being formed on two consecutive of the large faces (1b, 1c).

4. Appliance in accordance with any one of claims 1 to 3, characterized in that it comprises safety means for preventing the supply of electric power to that compartment (2, 3) which is not in its normal operating position.

5. Appliance in accordance with claim 4, characterized in that the safety means consist of switches placed in series with the push-button switches normally provided for manual control, said safety switches being controlled by the weight of the appliance (switches 20) or by means (25) which are sensitive to its orientation in space (switch 27).

6. Appliance in accordance with claim 4, characterized in that the safety means are of the mechanical type (30 or 41) controlled by gravity and designed to neutralize the control push-buttons (12, 13) when the appliance (1) is not in the normal position of utilization of the corresponding circuits.

7. Appliance in accordance with claim 4, characterized in that the safety means comprise at least one switch (20) with push-button (21) placed on the electric supply circuit (22) of one of the cooking compartments (3), said push-button (21) being designed to project relative to the bearing means (4a, 4b ; 5a, 5b) and being actuated so as to open the switch (20) when the compartment (3) controlled by said switch (20) is not in the service position.

8. Appliance (1) in accordance with claim 4 or 5, characterized in that the safety means comprise at least one switch (27, 42) placed on the electric supply circuit of one of the cooking compartments (2, 3), said switch (27, 42) being controlled by a pendulum (25, 41) the angular position of which depends on that of the appliance (1), said pendulum (25, 41) opening the switch (27, 42) when the compartment (2, 3) controlled by said switch is not in the service position.

9. Appliance in accordance with claim 8, characterized in that the push-button (12) for manual control of the heating circuit (22) of one of the compartments (2, 3) comprises means such as a cam (44) for controlling the corresponding switch (42) by means of the pendulum (41), the mechanical connection between the push-button (12) and the pendulum (41) being neutralized when the appliance is not in the intended position for putting the heating circuit (22) considered into service.

10. Appliance (1) in accordance with claim 4 in which the compartment (2) for toasting bread has a movable basket (29) actuated by a slide-block (13) which is capable of displacement on one side of the compartment (2), actuation of this slide-block (13) being also intended to initiate supply of current to the heating means of the compartment (2), characterized in that the safety means comprise a hook (30) which oscillates as a function of the orientation of the appliance, the slide-block (13) being locked in the inactive position by said hook (30) when said compartment (2) is not in its natural operating position.

FIG.1

FIG.2

FIG.3

FIG.4

FIG.5

FIG_6

FIG_7

FIG_8